(19) Europäisches Patentamt
European Patent Office
Office européen des brevets

(11) **EP 4 672 590 A1**

(12) **EUROPÄISCHE PATENTANMELDUNG**

(43) Veröffentlichungstag:
**31.12.2025 Patentblatt 2026/01**

(21) Anmeldenummer: **25184768.7**

(22) Anmeldetag: **24.06.2025**

(51) Internationale Patentklassifikation (IPC):
*H02P 3/18* (2006.01)    *B25F 5/00* (2006.01)
*H02J 7/00* (2006.01)    *H02P 21/22* (2016.01)
*H02P 21/36* (2016.01)

(52) Gemeinsame Patentklassifikation (CPC):
**H02P 21/36; B25F 5/00; H02J 7/00304;
H02J 7/007; H02P 3/18; H02P 21/22**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **27.06.2024 DE 102024118232**

(71) Anmelder: **Andreas Stihl AG & Co. KG
71336 Waiblingen (DE)**

(72) Erfinder:
• **Jackenkroll, Jan Lukas
71334 Waiblingen (DE)**
• **Dietrich, Simon
71336 Waiblingen (DE)**
• **Kugler, Ingo
71334 Waiblingen (DE)**

(74) Vertreter: **Zurhorst, Stefan et al
Patentanwälte
Dipl.Ing. W. Jackisch & Partner mbB
Menzelstraße 40
70192 Stuttgart (DE)**

(54) **VERFAHREN ZUM BETRIEB EINES FELDGEFÜHRTEN ELEKTROMOTORS**

(57)    Die Erfindung betrifft ein Verfahren und eine Vorrichtung zum Betrieb eines feldgeführten Elektromotors (1) an einem Akkupack (3). In einem Motorbetrieb setzt sich der Motorstrom (7) aus einem feldbildenden Motorstromanteil ($i_d$) und einem momentbildenden Motorstromanteil ($i_q$) zusammen, die eine Stromamplitude (A, A') des Motorstroms (7) bilden. Um den Elektromotor schnell zu bremsen mit der Option eines jederzeit möglichen Umschaltens zur Beschleunigung des Elektromotors ist vorgesehen, den Bremsbetrieb in zwei zeitlich getrennte Bremsabschnitte (B1; B2) aufzuteilen. In einem ersten Bremsabschnitt (B1) wird die Stromamplitude (A) des Motorstroms (7) durch Anpassen des feldbildenden Motorstromanteils ($i_d$) konstant gehalten während in einem zweiten Bremsabschnitt (B2) die Stromamplitude (A') des Motorstroms (7) variabel ist. Das Umschalten des Bremsbetriebs von dem ersten Bremsabschnitt (B1) in den zweiten Bremsabschnitt (B2) erfolgt bei Unterschreiten einer vorgegebenen Drehzahl ($n_G$) des Elektromotors (1).

EP 4 672 590 A1

*FIG. 7*

**Beschreibung**

Die Erfindung betrifft ein Verfahren zum Betrieb eines feldgeführten Elektromotors, der mit einer Steuervorrichtung an zumindest einem Akkupack mit einer Versorgungsspannung betrieben wird. Der Elektromotor weist einen Stator und einen Rotor auf, wobei der Stator mehrere Feldwicklungen trägt. In einem Motorbetrieb werden zur Ausbildung eines antreibenden elektromagnetischen Drehfeldes die Feldwicklungen in Abhängigkeit der Drehlage des Rotors von der Steuervorrichtung aus dem Akkupack bestromt, wobei sich die Amplitude des Motorstrom aus einem ersten, einen feldbildenden Motorstromanteil $i_d$ und einem zweiten, momentbildenden Motorstromanteil $i_q$ zusammensetzt. In einem rekuperativen Bremsbetrieb bewirken die bei laufendem Rotor in den Feldwicklungen des Stators induzierten Spannungen einen das Bremsmoment bestimmenden momentbildenden Motorstromanteil $i_q$, von dem ein Rekuperationsstrom für eine Rückspeiseleistung in den Akkupack abgeleitet werden kann. Der Rekuperationsstrom wird dem Akkupack zur Aufladung zugeführt.

Das Laden eines Akkupacks ist u. a. abhängig von seiner Kapazität und seinen Kenngrößen, d. h., ein Akkupack hat z. B. einen maximal zulässigen Entladestrom sowie einen maximal zulässigen Ladestrom. Derartige Kenngrößen sind auch abhängig vom Aufbau der im Akkupack verwendeten Einzelzellen, vom Typ der Einzelzellen (Lithium-Ionen, Lithium-Polymer, Lithium-Eisen oder auch Nickelmetallhydrid oder dgl. Energiespeicher), von der Temperatur des Akkupacks und dgl. Parameter.

Im rekuperativen Betrieb des Elektromotors darf der zur Aufladung des Akkupacks fließende Rekuperationsstrom einen maximal zulässigen Ladestrom des verwendeten Akkupacks nicht übersteigen. Der maximal zulässige Ladestrom des Akkupacks ist abhängig von dem momentbildenden Motorstromanteil zum Bremsen des Rotors. Zugleich bestimmt die Größe des momentbildenden Motorstromanteils zum Bremsen des Rotors aber auch die Auslaufzeit des Elektromotors bis zu seinem Stillstand.

Wird ein elektrisches Arbeitsgerät mit einem Werkzeug betrieben, ergeben sich entsprechende Auslaufzeiten des Elektromotors bis zum Stillstand. Im Betrieb des Arbeitsgerätes unterbricht der Benutzer seine Arbeit oft nur kurz, um z. B. die Arbeitsposition zu wechseln. Sobald der Benutzer das Betriebselement (auch als Gashebel bezeichnet) loslässt, geht die Steuervorrichtung in den elektrischen Bremsbetrieb. Bevor aber das Werkzeug bzw. der Elektromotor zum Stillstand kommt, betätigt der Benutzer erneut das Betriebselement (gibt Gas), um seine Arbeit fortzusetzen. Da der Elektromotor aber Bremsbetrieb ist, können sich zeitliche Verzögerungen bis zu einer erneuten Beschleunigung ergeben, die der Benutzer als störend empfindet.

Der Erfindung liegt die Aufgabe zugrunde, ein Verfahren zum Betrieb eines feldgeführten Elektromotors anzugeben, das einerseits ein rasches Abbremsen des Elektromotors bis zum Stillstand ermöglicht, andererseits aber während dem Bremsbetrieb jederzeit ein Umschalten auf eine Beschleunigung des Elektromotors erlaubt.

Die Aufgabe wird mit einem Verfahren nach Anspruch 1 gelöst. Eine Vorrichtung zur Durchführung des Verfahrens ist im Anspruch 8 angegeben.

Nach der Erfindung wird der Bremsbetrieb des Elektromotors in zumindest zwei zeitlich getrennte Bremsabschnitte aufgeteilt. In einem ersten Bremsabschnitt wird durch Anpassen des feldbildenden Motorstromanteils die Stromamplitude des Motorstroms konstant gehalten. In einem zweiten Bremsabschnitt ist die Stromamplitude des Motorstroms variabel. Ein Umschalten des Bremsbetriebs von dem ersten Bremsabschnitt in den zweiten Bremsabschnitt erfolgt bei Unterschreiten einer vorgegebenen Drehzahl des Elektromotors.

In diesem optimierten Bremsverfahren wird eine konstante Motorstromamplitude eingeregelt. Die Aufteilung zwischen einem momentbildenden Motorstromanteil $i_q$ und einem feldbildenden Motorstromanteil $i_d$ ist so gewählt, dass in dem ersten Bremsabschnitt die Stromamplitude des Motorstroms konstant ist. Dieser Motorstrom kann als Rekuperationsstrom zum Aufladen des Akkupacks genutzt werden. Erst ab einer vorgegebenen Drehzahlgrenze wird auf den zweiten Bremsabschnitt mit variabler Stromamplitude umgeschaltet.

Nach dem erfindungsgemäßen Verfahren wird mit einer Steuervorrichtung zum Betrieb des Elektromotors im Bremsbetrieb sichergestellt, dass im ersten Bremsabschnitt die Stromamplitude konstant ist. Trotz der Begrenzung der Stromamplitude des Motorstroms ist eine schnelle und effektive Bremsung des Elektromotors innerhalb einer vorgegebenen Bremszeit möglich. Gleichzeitig kann während dem Bremsbetrieb jederzeit auf eine Beschleunigung des Elektromotors umgeschaltet werden. Durch Variation des feldbildenden ersten Motorstromanteils $i_d$ ungleich Null wird unmittelbar der momentbildende Motorstromanteil $i_q$ in seiner Größe eingestellt und dabei zugleich ein feldbildender Stromfluss generiert, der eine elektrische Verlustleistung im Stator bewirkt. Diese durch den feldbildenden Motorstromanteil $i_d$ bedingte ohmsche Verlustleistung erhöht die Bremsleistung des Elektromotors, so dass ohne Ansteigen des von dem momentbildenden Motorstromanteil $i_q$ abhängigen Rekuperationsstroms über den vorgegebenen Grenzwert eine erhöhte, gesteuerte Bremsleistung zur Verfügung steht, die ein schnelles Abbremsen des Elektromotors und damit des Werkzeugs innerhalb einer vorgegebenen Bremszeit sicherstellt.

Die Größe der Stromamplitude im ersten Bremsabschnitt wird insbesondere in Abhängigkeit von der Temperatur einer Steuervorrichtung und/oder des Elektromotors eingestellt ist. Die Temperatur des Elektromotors wird bestimmt an der Wicklung und/oder am Permanentmagneten. Die Temperatur der Steuervorrichtung wird bestimmt an den elektronischen Schaltelementen. Zweckmäßig ist auch die Einstellung der Größe der Stromamplitude in Abhängigkeit von der Größe einer am Elektromotor anliegenden Versorgungsspannung. Ganz insbesondere wird die Stromamplitude in Abhängigkeit von einer Induktivität des Elektromotors und/oder eines verketteten magnetischen Flusses des Elektromotors eingestellt.

In Weiterbildung der Erfindung ist in dem ersten Bremsabschnitt der feldbildende Motorstromanteil $i_d$ des Motorstroms ungleich Null eingestellt. Dies kann insbesondere genutzt werden, um eine rekuperative Rückspeiseleistung in den Akkupack durch das Anpassen des feldbildenden Motorstromanteils $i_d$ zu begrenzen. Nähert sich der Rekuperationsstrom zum Laden des Akkupacks dem vorgegebenen Grenzwert, wird Einfluss auf den feldbildenden zweiten Motorstromanteil $i_d$ genommen und dieser verändert. Neigt der Rekuperationsstrom zum Laden des Akkupacks dazu, einen vorgegebenen Grenzwert zu überschreiten, wird der feldbildende Motorstromanteil $i_d$ ungleich Null eingestellt, derart, dass der vorgegebene Grenzwert des Rekuperationsstroms zum Laden des Akkupacks nicht überschritten wird. In Weiterbildung der Erfindung ist vorgesehen, dass im Bremsbetrieb die Einstellung des feldbildenden ersten Motorstromanteils $i_d$ derart erfolgt, dass im Bremsbetrieb des Elektromotors bei gleicher rekuperativer Rückspeiseleistung $P_{Akku}$ in den Akkupack die Bremsleistung des Elektromotors ansteigt. Insbesondere nimmt im Bremsbetrieb bei sinkender Drehzahl der feldbildende, erste Motorstromanteil $i_d$ ab, der zweite, momentbildende Motorstromanteil $i_q$ nimmt zu.

Es kann vorteilhaft sein, wenn der erste Bremsabschnitt eine zeitliche Dauer aufweist, die größer oder gleich der zeitlichen Dauer des zweiten Bremsabschnitts ist. Insbesondere ist ein Verhältnis der zeitlichen Dauer des ersten Bremsabschnitts zu der zeitlichen Dauer des zweiten Bremsabschnitts maximal 10 zu 1, insbesondere maximal 4 zu 1, insbesondere maximal 3 zu 1, insbesondere 2 zu 1 und insbesondere minimal 1 zu 1.

In einer möglichen Ausführungsform des Verfahrens wird im Betrieb des feldgeführten Elektromotors ein dreiphasiges Drehfeld aufgebaut, wobei die in den Feldwicklungen fließenden Ströme $i_a$, $i_b$, $i_c$ des dreiphasigen Drehfeldes als Vektoren des Drehfeldes erfasst werden. Diese erfassten Vektoren des Drehfeldes werden elektronisch in einen Motorstrom in zweidimensionaler Darstellung transformiert. Der aus dem ersten, einen feldbildenden Motorstromanteil $i_d$ und einem zweiten, das bremsende Drehmoment bestimmenden momentbildenden Motorstromanteil $i_q$ zusammengesetzte Motorstrom der zweidimensionalen Darstellung wird derart eingestellt, dass im Bremsbetrieb des Elektromotors der feldbildende zweite Motorstromanteil $i_d$ ungleich Null ist, z. B. größer Null oder kleiner Null eingestellt wird. Die Einstellung erfolgt vorzugsweise derart, dass der erste feldbildende Motorstromanteil $i_d$ derart eingestellt wird, dass der Rekuperationsstrom zum Laden des Akkupacks einen vorgegebenen Grenzwert nicht übersteigt. Nach Einstellung des feldbildenden zweiten Motorstromanteils $i_d$ in der zweidimensionalen Darstellung werden die Werte in das dreiphasige Drehfeld zurücktransformiert und über die Steuervorrichtung dem Elektromotor aufgeschaltet.

Eine Vorrichtung zur Durchführung des Verfahrens zum Abbremsen eines feldgeführten Elektromotors aus einem Stator und einem Rotor umfasst einen Akkupack zum Betrieb des Elektromotors über eine zwischen dem Elektromotor und dem Akkupack vorgesehene Steuervorrichtung zur Einstellung des Motorstroms. Der Stator des Elektromotors trägt mehrere Feldwicklungen, insbesondere drei in einem elektrischen Winkel von 120° zueinander versetzte Feldwicklungen, die zur Ausbildung eines elektromagnetischen Drehfeldes angeordnet sind. Die Steuervorrichtung ist ausgebildet, um im Motorbetrieb die Feldwicklungen des Stators in Abhängigkeit der Drehlage des Rotors in Drehrichtung antreibend zu bestromen, und ferner, um im Bremsbetrieb den aufgrund der in den Feldwicklungen des Stators induzierten Spannungen auftretende Motorstrom als Rückspeiseleistung dem Akkupack zur Aufladung zuzuführen. Die Steuervorrichtung weist einen Wandler auf, der ausgebildet ist, die in den Feldwicklungen fließenden Ströme $i_a$, $i_b$, $i_c$ des mehrphasigen Drehfeldes als Vektoren des Drehfeldes zu erfassen und elektronisch in einen Motorstrom in zweidimensionaler Darstellung zu transformieren. Der Motorstrom der zweidimensionalen Darstellung besteht aus einem feldbildenden ersten Motorstromanteil $i_d$ und einem das bremsende Drehmoment bestimmenden zweiten momentbildenden Motorstromanteil $i_q$. Die Steuervorrichtung weist ein Regelglied auf, das geeignet ist, die Motorstromanteile des zweidimensionalen Motorstroms in Abhängigkeit des Betriebszustandes des Elektromotors und von vorgegebenen Grenzwerten derart einzustellen, dass im Bremsbetrieb des Elektromotors in zumindest einem ersten Bremsabschnitt eine Stromamplitude des Motorstroms durch Anpassen des feldbildenden Motorstromanteils konstant ist, und zumindest in einem zweiten, zeitlich getrennten Bremsabschnitt die Stromamplitude des Motorstroms variabel ist, wobei eine Umschaltvorrichtung vorgesehen ist, die geeignet ist, bei Unterschreiten einer vorgegebenen Drehzahl des Elektromotors aus dem zumindest einen ersten Bremsabschnitt auf den zumindest einen zweiten Bremsabschnitt des Bremsbetriebes umzuschalten.

Insbesondere ist die Steuervorrichtung ausgebildet, eine Größe der Stromamplitude in Abhängigkeit von einer Temperatur der Steuervorrichtung und/oder des Elektromotors einzustellen. Zweckmäßig ist die Steuervorrichtung ausgebildet, die Größe der Stromamplitude in Abhängigkeit von der Größe einer am Elektromotor anliegenden Versorgungsspannung einzustellen. Ganz insbesondere ist die Steuervorrichtung ausgebildet, die Stromamplitude in Abhängigkeit von einer Induktivität des Elektromotors und/oder eines verketteten magnetischen Flusses des Elektromotors einzustellen.

In Weiterbildung der Vorrichtung ist die Steuervorrichtung ausgebildet, in dem zumindest einen ersten Bremsabschnitt den feldbildenden Motorstromanteil des Motorstroms mittels des Regelglieds ungleich Null einzustellen.

Es ist vorteilhaft, die Steuervorrichtung derart auszubilden, dass eine rekuperative Rückspeiseleistung in den Akkupack durch das Anpassen des feldbildenden Motorstromanteils mittels des Regelglieds zu begrenzen. Es kann vorgesehen sein, dass mit der Steuervorrichtung im Bremsbetrieb den feldbildenden ersten Motorstromanteil derart einzustellen, dass im Bremsbetrieb des Elektromotors bei gleicher rekuperativer Rückspeiseleistung in den Akkupack eine Bremsleistung des Elektromotors ansteigt.

In Weiterbildung der Erfindung ist die Steuervorrichtung ausgebildet, den Elektromotor für eine zeitliche Dauer im ersten Bremsabschnitt zu betreiben, wobei die zeitliche Dauer des ersten Bremsabschnitts größer oder gleich einer zeitlichen Dauer des zweiten Bremsabschnitts ist.

Der feldgeführte Elektromotor ist ausgebildet, im Betrieb ein dreiphasiges Drehfeld aufzubauen. Die in den Feldwicklungen fließenden Ströme des dreiphasigen Drehfeldes werden als Vektoren des Drehfeldes erfasst und elektronisch in einen Motorstrom in zweidimensionaler Darstellung transformiert. Der in zweidimensionaler Darstellung aus dem ersten, feldbildenden Motorstromanteil und dem zweiten, momentbildenden Motorstromanteil zusammengesetzte Motorstrom wird mittels des Regelglieds derart eingestellt, dass im Bremsbetrieb des Elektromotors der feldbildende Motorstromanteil ungleich Null ist.

Der Elektromotor kann ein Synchronmotor oder auch ein Asynchronmotor sein.

Vorteilhaft ist der Elektromotor der Antriebsmotor in einem handgeführten Arbeitsgerät, insbesondere in einem tragbaren Arbeitsgerät. Ein handgeführtes Arbeitsgerät, insbesondere ein bodengeführten Arbeitsgerät kann z. B. ein Rasenmäher, eine Bodenfräse, ein Trennschleifer oder dgl. Arbeitsgerät sein. Handgeführte, tragbare Arbeitsgeräte sind z.B. Motorkettensägen, Trennschleifer, Freischneider oder dgl. insbesondere akkubetriebene Arbeitsgeräte.

Weitere Merkmale der Erfindung ergeben sich aus den weiteren Ansprüchen, der Beschreibung und der Zeichnung, in der nachfolgend ein Ausführungsbeispiel des Verfahrens sowie der Vorrichtung beschrieben ist. Die Merkmale der Ansprüche sowie die in der Beschreibung und in den Zeichnungen offenbarten Merkmale können im Rahmen der Erfindung untereinander, insbesondere in beliebiger Weise, kombiniert werden.

Es zeigen:

Fig. 1     in schematischer Darstellung den Grundaufbau einer Schaltungsanordnung zum Betrieb eines feldgeführten Elektromotors an einem Akkupack,

Fig. 2     eine schematische Darstellung eines feldgeführten Elektromotors mit im Stator um 120° zueinander versetzt angeordneten Feldwicklungen,

Fig. 3     in schematischer Darstellung eine vorzugsweise in der Steuervorrichtung vorgesehene Bremsschaltung zur Einstellung des Bremsstroms,

Fig. 4     in schematischer Darstellung den Elektromotor mit einem Motorstrom als rekuperativen Bremsstrom mit einem momentbildenden Motorstromanteil $i_q$ und mit einem zu Null eingestellten feldbildenden Motorstromanteil $i_d$,

Fig. 5     eine schematische Darstellung entsprechend Fig. 4 mit einem rekuperativen Bremsstrom mit einem momentbildenden Motorstromanteil $i_q$ und mit einem ungleich Null eingestellten feldbildenden Motorstromanteil $i_d$,

Fig. 6     in schematischer Darstellung eine Vorrichtung zur Einstellung der Motorstromanteile $i_q$ und $i_d$ des Motorstroms im Bremsbetrieb,

Fig. 7     in schematischer Darstellung einen Bremsbetrieb aus zwei Bremsabschnitten mit unterschiedlichen Amplituden des Motorstroms,

Fig. 8     in schematischer Darstellung den im Bremsbetrieb fließenden Motorstrom, der aus einem Motorstromanteil $i_q$ und einem Motorstromanteil $i_d$ zusammengesetzt ist.

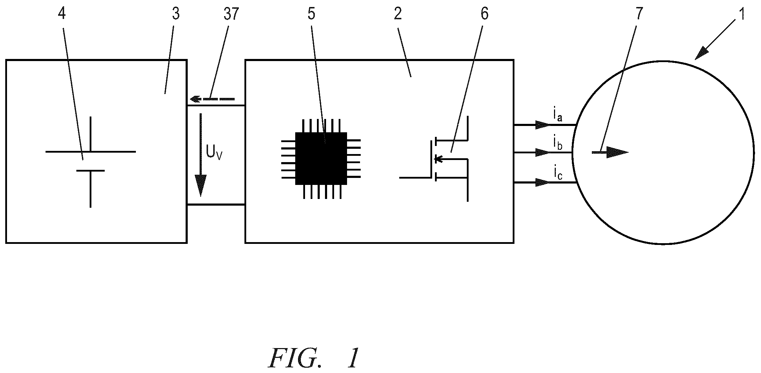

In Fig. 1 ist ein feldgeführter Elektromotor 1 dargestellt, der über eine Steuervorrichtung 2 aus einem Akkupack 3 mit einer Versorgungsspannung $U_V$ betrieben ist. Die Steuervorrichtung 2 umfasst eine Steuereinheit 5 und elektronischen Schaltelemente 6. Der Akkupack 3 besteht aus einer Vielzahl von Einzelzellen 4, die innerhalb des Akkupacks 3 zu einem Zellverbund elektrisch zusammengeschaltet sind. Die Einzelzellen 4 können Lithium-Ionen-Zellen, Lithium-Polymer-Zellen, Lithium-Eisen-Zellen oder auch Einzelzellen anderen chemischen Aufbaus sein, z. B. NiCd, NiMh oder dgl. Zellen.

Die Steuervorrichtung 2 liegt an der Versorgungsspannung $U_V$ des Akkupacks 3 an, die als Gleichspannung zur Verfügung steht. Eine Steuereinheit 5, insbesondere ein Mikroprozessor, steuert eine Ansteuerschaltung aus elektronischen Schaltelementen 6, insbesondere MOSFET's. Durch entsprechende Ansteuerung der Schaltelemente 6 fließen dem vorteilhaft als feldgeführter, dreiphasiger Elektromotor ausgebildeten Elektromotor 1 ein aus Betriebsströmen $i_a$, $i_b$ und $i_c$ bestehender Motorstrom 7 zu.

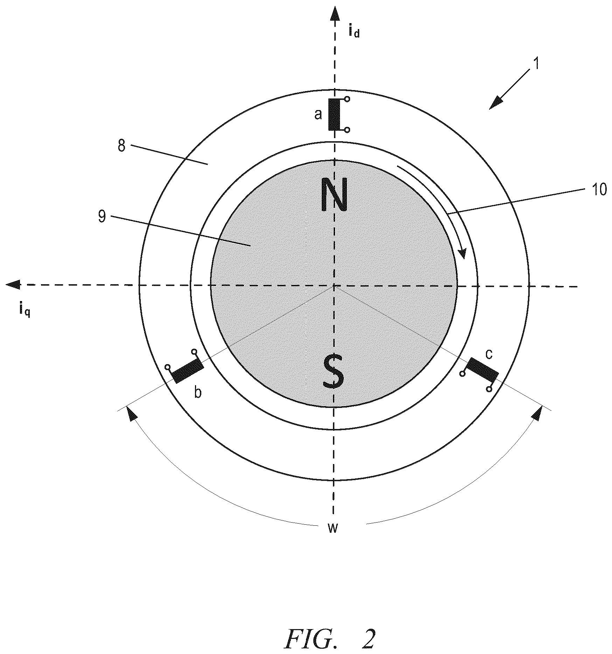

Wie in Fig. 2 dargestellt, weist der Elektromotor 1 einen Stator 8 und einen Rotor 9 auf. Der Stator 8 trägt Feldwicklungen a, b und c, die über den Kreisumfang des Stators 8 mit einem elektrischen Winkelabstand w von 120° angeordnet sind. Die in Fig. 1 gezeigten Betriebsströme $i_a$, $i_b$ und $i_c$ sind den jeweiligen Feldwicklungen a, b und c zugeordnet. Der Rotor 9 trägt zumindest einen Permanentmagneten mit den Magnetpolen N und S. Im Motorbetrieb des Elektromotors 1 bestromt die Steuereinheit 5 in Abhängigkeit der Drehlage des Rotors 9 die Feldwicklungen a, b und c zur Ausbildung eines antreibenden elektromagnetischen Drehfeldes in Drehrichtung 10.

Der Motorstrom 7 lässt sich im Motorbetrieb als auch im Bremsbetrieb grundsätzlich in einen ersten feldbildenden Motorstromanteil $i_d$ sowie einen zweiten, momentbildenden Motorstromanteil $i_q$ aufteilen. Der feldbildende Motorstromanteil $i_d$ bewirkt den Aufbau des elektromagnetischen Drehfeldes durch die Feldwicklungen a, b und c, während der Motorstromanteil $i_q$ ein antreibendes Drehmoment des Rotors 9 bewirkt. Im weiteren Sinne bewirkt der Motorstromanteil $i_q$ eine Wirkleistung und der Motorstromanteil $i_d$ eine Blindleistung des Elektromotors 1 im Betrieb. In einer zweidimensionalen Vektordarstellung der Motorstromanteile $i_d$, $i_q$, ergibt sich als Vektor der Motorstrom 7 mit einer Stromamplitude A.

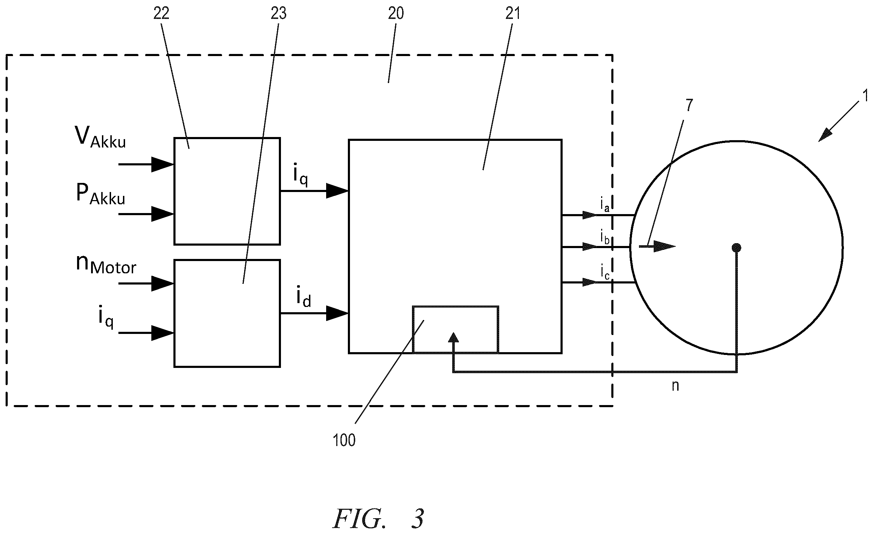

In bevorzugter Ausbildung der Steuervorrichtung 2 ist in dieser eine Bremsschaltung 20 vorgesehen, wie sie beispielhaft in Fig. 3 gezeigt ist. Die Bremsschaltung 20 kann auch als von der Steuervorrichtung 2 getrennte Schaltungsanordnung vorgesehen sein. In Fig. 3 ist eine schematisch dargestellte Bremsschaltung 20 mit dem Elektromotor 1 verbunden. Sie umfasst eine Ansteuerschaltung 21 zur Einstellung eines Rekuperationsstroms 27, der auch als negativer Motorstrom 7 bezeichnet werden kann. Die Ansteuerschaltung 21 ist mit einer Überwachungsschaltung 22 des Akkupacks 3 verbunden, der die Spannung $V_{Akku}$ sowie die Leistung $P_{Akku}$ des Akkupacks 3 mitgeteilt ist. Aus diesen Größen bestimmt die Überwachungsschaltung 22 die Größe des zulässigen Rekuperationsstroms 27, der dem Akkupack maximal zugeführt werden darf. Der Rekuperationsstrom 27 des Elektromotors 1 (negativer Motorstrom 7) teilt sich auf in einen momentbildenden Motorstromanteil $i_q$ und einen verlustbildenden, feldbildenden Motorstromanteil $i_d$. Der feldbildenden Motorstromanteil $i_d$ wird in Abhängigkeit der Motordrehzahl $n_{Motor}$ des Elektromotors 1 und dem aus den Kenngrößen des Akkupacks 3 bestimmten Rekuperationsstrom 27, der aus dem drehmomentbildenden Motorstromanteil $i_q$ abgeleitet ist, vorgegeben. So kann mit den Eingangsgrößen der Motordrehzahl $n_{Motor}$ und des die Größe des rekuperativen Rekuperationsstroms 27 bestimmenden Motorstromanteils $i_q$ aus einem Kennfeld oder einem Speicher 23 der einzustellende feldbildendende Motorstromanteil $i_d$ ausgelesen und der Ansteuerschaltung 21 vorgegeben werden.

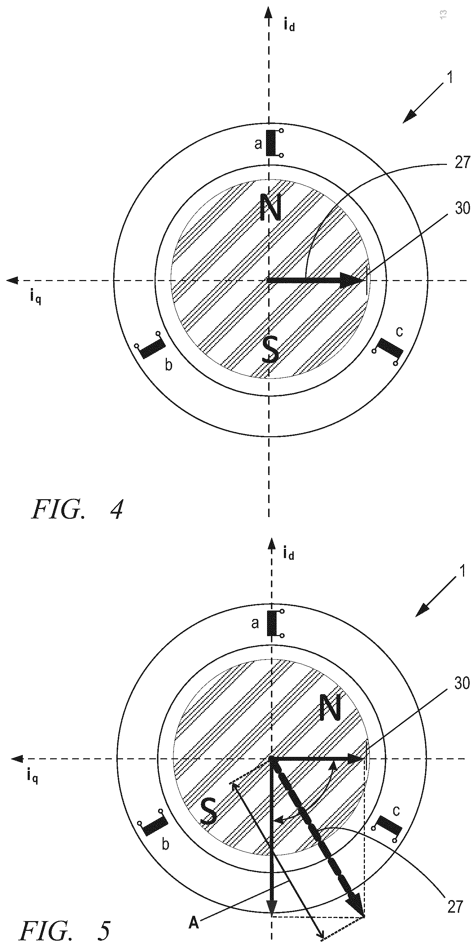

In Fig. 4 ist in schematischer Darstellung der Elektromotor 1 im Bremsbetrieb dargestellt. Der als negativer Motorstrom dargestellte Rekuperationsstrom 27 ist ausschließlich von dem drehmomentbildenden Motorstromanteil $i_q$ bestimmt, da der feldbildenden Motorstromanteil $i_d$ zu Null eingestellt ist. Die Bremszeit des Elektromotors 1 ist wesentlich bestimmt durch den Rekuperationsstrom 27, der dem momentbildenden Motorstromanteil $i_q$ entspricht. Der momentbildende Motorstromanteil $i_q$ bestimmt den Rekuperationsstrom 27 zum Aufladen des Akkupacks 3. Die sich im Bremsbetrieb ergebende rekuperative Rückspeiseleistung $P_{Akku}$ in den Akkupack 3 lässt sich in etwa nach folgender Formel abschätzen:

$$P_{Akku} = const = 1.5(i_q * p * \Psi_{PM} * \omega_{mech} - R * i_q{}^2 - R * I_d{}^2) \text{ mit } M \sim i_q \text{ und } I_d = 0$$

und den Variablen:

$j_q =$ momentbildender Motorstromanteil
$p =$ Polpaarzahl
$\Psi_{PM} =$ verketteter magnetischer Fluss
$\omega_{mech} =$ mechanische Winkelgeschwindigkeit
$R =$ ohmscher Widerstand der Feldwicklungen
$I_d =$ feldbildender Motorstromanteil

Für die mit dem Bezugszeichen A versehenes Stromamplitude $I_{amp}$ des Elektromotors 1 gilt

$$I_{amp} < \frac{\Psi_{PM}}{L}$$

wobei L eine Induktivität des Elektromotors 1 bezeichnet und $\Psi_{PM}$ den verketteten magnetischen Fluss. Die rekuperative Rückspeiseleistung ist durch

$$P_{Akku} = const. = 1{,}5 * (p * i_q * \Psi_{PM} * \omega_{mech} - R * I_{amp}^2)$$

bestimmt, wobei $\omega_{mech}$ eine mechanische Winkelgeschwindigkeit angibt.

Da der momentbildende Motorstromanteil iq begrenzt ist durch den maximal zulässigen Rekuperationsstrom 27 zum Laden des Akkupacks 3, kann zur Erhöhung der Bremsleistung des Elektromotors 1 der momentbildende Motorstromanteil $i_q$ nicht beliebig erhöht werden. Dies würde einhergehen mit einer Erhöhung des dem Akkupack 3 zufließenden Rekuperationsstroms (Ladestrom) und könnte damit zu einer elektrischen Überlastung des Akkupacks 3 führen.

Der feldbildende Motorstromanteil $i_d$ derart einzustellen, dass ohne Überschreiten des vorgegebenen Grenzwertes des Rekuperationsstroms 27 zum Laden des Akkupacks 3 der momentbildende Motorstromanteil $i_q$ nicht zu groß wird und dennoch die Bremsleistung des Elektromotors 1 erhöht ist. Dies ist schematisch in Fig. 5 dargestellt.

Aufgrund des Bremsbetriebs des Elektromotors 1 liegt der momentbildende Motorstromanteil $i_q$ und der feldbildenden Motorstromanteil $i_d$ im negativen Achsenbereich der schematischen Darstellung in Fig. 5. Die Amplitude A des Rekuperationsstroms 27 ist ein zusammengesetzter Vektor aus dem momentbildenden Motorstromanteil $i_q$ und dem feldbildenden Motorstromanteil $i_d$. Wie Fig. 5 deutlich zeigt, ist der Vektor des Rekuperationsstroms 27 deutlich größer als der in Fig. 4 dargestellte Vektor des Rekuperationsstroms 27. In Fig. 5 ist der feldbildende Motorstromanteil $i_d$ so groß gewählt, dass der momentbildende Motorstromanteil $i_q$ und damit der Rekuperationsstrom 27 zum Laden des Akkupacks nicht über einen zulässigen Grenzwert ansteigt. Dennoch ist der Bremsstrom 27 deutlich größer als in Fig. 4. Durch Einstellung der Größe des feldbildenden Motorstromanteils $i_d$ ist bei großer Bremsleistung eine präzise Einstellung des aus dem momentbildenden Motorstromanteils $i_q$ abgeleiteten Rekuperationsstroms 27 zum Laden des Akkupacks 3 gewährleistet, ohne dass der zulässige maximale Ladestrom in den Akkupack überschritten wird.

Vorteilhaft kann ein Grenzwert 30 des momentbildenden Motorstromanteils $i_q$ derart festgelegt werden, dass der Rekuperationsstrom 27 etwa, insbesondere genau, einem maximal zulässigen Ladestrom in den Akkupack 3 entspricht.

In dem Ausführungsbeispiel nach Fig. 5 besteht zwischen dem drehmomentbildenden Motorstromanteil $i_q$ und dem feldbildenden Motorstromanteil $i_d$ eine Phasenverschiebung 33 von 90°. Die Einstellung des momentbildenden Motorstromanteils $i_q$ kann durch die Einstellung der Größe des feldbildenden Motorstromanteils $i_d$ erfolgen.

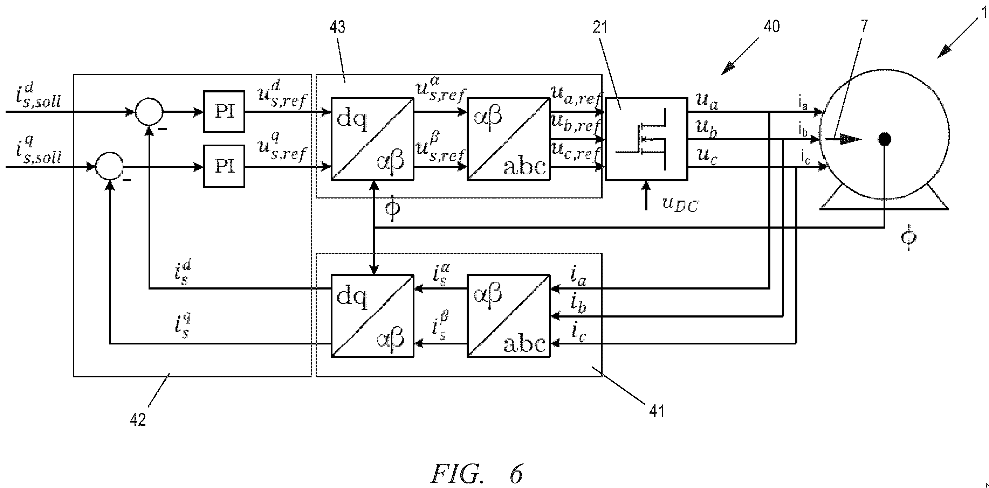

In Fig. 6 ist eine Vorrichtung 40 zur Durchführung des erfindungsgemäßen Verfahrens wiedergegeben. Die Steuervorrichtung 2 steuert das Drehfeld des Elektromotors 1 durch Ansteuerung der Feldwicklungen a, b, c, mit den Ansteuerspannungen $u_a$, $u_b$, $u_c$, wodurch sich die Betriebsströme $i_a$, $i_b$, $i_c$ der Feldwicklungen a, b, c ergeben, um in Abhängigkeit der Drehlage des Rotors diesen in Drehrichtung 10 drehend anzutreiben. Die Vorrichtung 40 ist mit einer entsprechend ausgebildeten Steuervorrichtung 2 derart ausgebildet, dass im Bremsbetrieb die in den Feldwicklungen a, b, c des Stators 8 induzierten Spannungen einen Rekuperationsstrom 27 zum Bremsen des Elektromotors 1 bewirken, dessen momentbildender Motorstromanteil $i_q$ eine rekuperativen Rückspeiseleistung $P_{Akku}$ in den Akkupack 3 bewirkt. Zur Steuerung der Motorstromanteile $i_q$ und $i_d$ des Bremsstroms 27 zwecks Erzielung einer hohen Bremsleistung ist ein Wandler 41 vorgesehen, der ausgebildet ist, die in den Feldspulen a, b, c fließenden Ströme $i_a$, $i_b$, $i_c$ des mehrphasigen Drehfeldes, insbesondere eines dreiphasigen Drehfeldes, als Vektoren des Drehfeldes zu erfassen und elektronisch in einen Motorstrom mit den Motorstromanteilen $i_d$, $i_q$ in zweiphasiger Darstellung zu transformieren. Der Bremsstroms bzw. der Motorstrom setzt sich zusammen aus dem ersten, feldbildenden Motorstromanteil $i_d$ und dem das Bremsmoment bestimmenden zweiten, momentbildenden Motorstromanteil $i_q$. Die Schaltungsanordnung weist ein Regelglied 42 auf, welches die Motorstromanteile $i_d$, $i_q$ des zweidimensionalen Bremsstroms 27 in Abhängigkeit des Betriebszustandes des Elektromotors 1 und von vorgegebenen Sollwerten $i_{dsoll}$, $i_{qsoll}$ derart einstellt, dass im Bremsbetrieb des Elektromotors 1 einerseits der erste, feldbildende Motorstromanteil $i_d$ des Rekuperationsstroms 27 (Bremsstrom) ungleich Null ist, derart, dass bei hoher Rückspeiseleistung $P_{Akku}$ in den Akkupack 3 die Bremsleistung des Elektromotors 1 ansteigt.

Die vom Regelglied 42 vorgegebenen Sollwerte der zweidimensionalen Darstellung werden über einen weiteren Wandler 43 in die dreidimensionale Darstellung zurück transformiert und - z. B. als Spannungswerte $u_{aref}$, $u_{bref}$, $u_{cref}$ - der Steuervorrichtung 2 zur Ansteuerung des Elektromotors 1 zugeführt. Entsprechend den vorgegebenen Spannungswerten wird die Steuervorrichtung 2 Ansteuerspannungen $u_a$, $u_b$, $u_c$ einstellen, welche zu dem gewünschten Rekuperationsstrom 27 mit dem vorgegebenen, das Bremsmoment bewirkenden Motorstromanteil $i_q$ und dem feldbildenden Motorstromanteil $i_d$ führt. Diese Einstellung der Motorstromanteile $i_d$, $i_q$ wird über die vom Wandler 41 dem Regelglied 42 zugeführten Werte permanent überwacht und korrigiert. Der zum Laden des Akkupacks genutzte Rekuperationsstrom 27 ist von dem momentbildenden Motorstromanteil $i_q$ bestimmt, wobei der Grenzwert des Rekuperationsstroms 27 auf den maximalen Ladestrom des angeschlossenen Akkupacks 3 festgelegt ist.

Die Drehzahl des Elektromotors bzw. die Drehlage des Rotors 9 des Elektromotors wird erfasst und den Wandlern 41 und 43 zur Verarbeitung zugeführt.

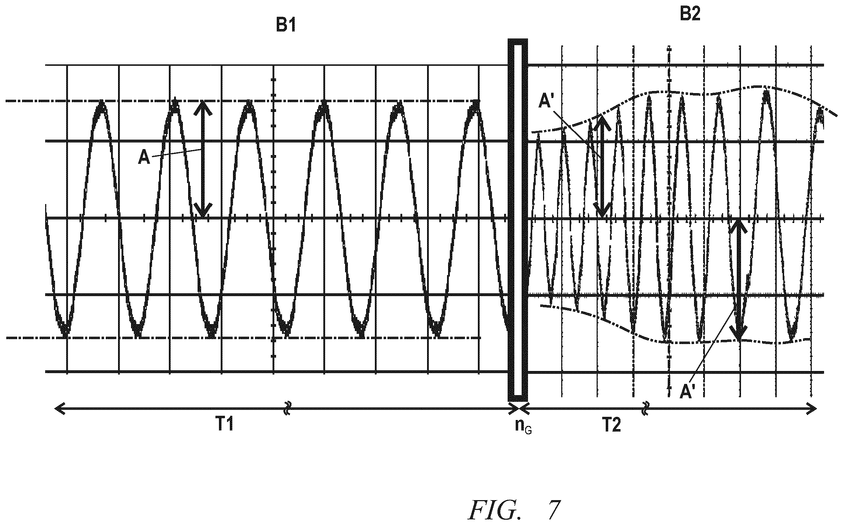

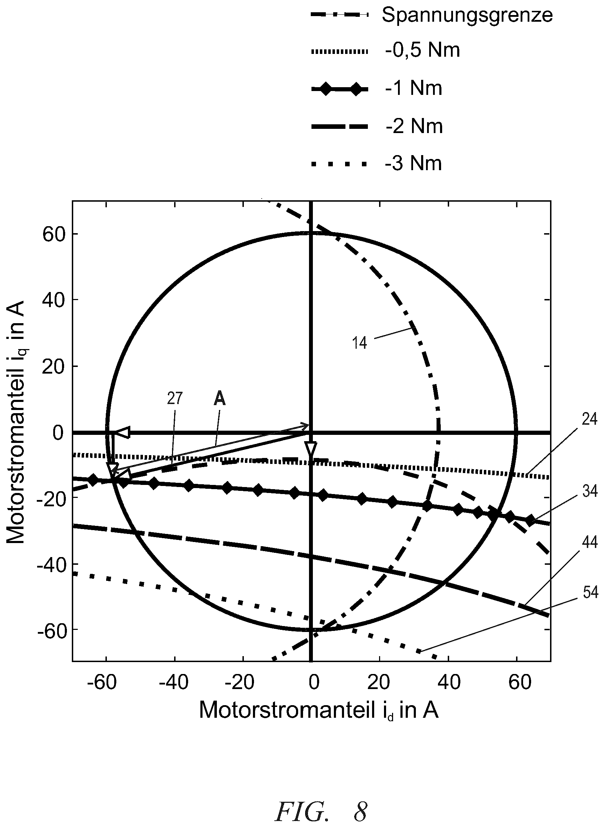

Wie in Fig. 7 dargestellt, ist der Bremsbetrieb in zwei Betriebsabschnitte B1 und B2 aufgeteilt. Im ersten Betriebsabschnitt B1 ist die Amplitude A des Rekuperationsstroms 27 über eine zeitliche Dauer T1 konstant. Dies wird, wie in Fig. 8 dargestellt, durch Anpassen des feldbildenden Motorstromanteils $I_d$ ausgeführt. Während dem Bremsbetrieb des Elektromotors 1 wird die Drehzahl n abfallen, bis eine vorgegebene Grenzdrehzahl $n_G$ erreicht oder unterschritten wird. Wird die Grenzdrehzahl $n_G$ erreicht oder unterschritten, schaltet die Steuervorrichtung 2 bzw. vorteilhaft in der Steuervorrichtung 2 integrierte Bremsschaltung 20 über eine Umschaltvorrichtung 100 (Fig. 3) von dem ersten Bremsabschnitt B1 auf einen zweiten Bremsabschnitt B2 um. Im zweiten Bremsabschnitt B2 ist die Stromamplitude A' variabel.

Die vorgegebene Drehzahl $n_G$ ist aus einem Wertebereich von minimal 10% einer Leerlaufdrehzahl des Elektromotors 1 und maximal 40% der Leerlaufdrehzahl des Elektromotors 1 ausgewählt. Vor Beginn des Bremsbetriebs wird der Elektromotor 1 mit einer Arbeitsdrehzahl angetrieben. Die vorgegebene Drehzahl $n_G$ wird zeitlich nach Ablauf des ersten Bremsabschnitts B1 unterschritten. Während des ersten Bremsabschnitts B1 sinkt die Drehzahl n, bis die vorgegebene Drehzahl $n_G$ erreicht, insbesondere unterschritten, ist. Insbesondere ist die zeitliche Dauer T1 des ersten Bremsabschnitts B1 bestimmt durch die Zeitdauer von einem Abbremsen aus dem Betrieb des Elektromotors 1 mit der Arbeitsdrehzahl bis zum Unterschreiten der vorgegebenen Drehzahl $n_G$. Die zeitliche Dauer T2 des zweiten Bremsabschnitts B2 ist bestimmt durch die Zeitdauer von dem Umschalten aus dem ersten Bremsabschnitt B1 bei Unterschreiten der vorgegebenen Drehzahl $n_G$ bis zum Stillstand des Elektromotors.

Der erste Bremsabschnitt B1 hat eine zeitliche Dauer T1, die größer oder gleich der zeitlichen Dauer T2 des zweiten Bremsabschnitts B2 ist. Insbesondere ist ein Verhältnis der zeitlichen DauerT1 des ersten BremsabschnittsB1 zu der zeitlichen Dauer T2 des zweiten Bremsabschnitts B2 maximal 10 zu 1, insbesondere maximal 4 zu 1, insbesondere maximal 3 zu 1, insbesondere 2 zu 1 und insbesondere minimal 1 zu 1.

Die Größe der über die Motorstromanteile $i_q$ und $i_d$ eingestellten Stromamplitude A des Rekuperationsstroms 27 wird in Abhängigkeit von der Temperatur der Steuervorrichtung 2 bzw. der Bremsschaltung 20 und/oder des Elektromotors 1 eingestellt. Die Temperatur des Elektromotors 1 wird an der Wicklung und/oder am Permanentmagneten abgegriffen. Die Temperatur der Steuervorrichtung 2 bzw. der Bremsschaltung 20 wird an den elektronischen Schaltelementen abgegriffen.

Ergänzend oder alternativ kann die Größe der Stromamplitude A in Abhängigkeit von der Größe der am Elektromotor 1 anliegenden Versorgungsspannung eingestellt sein. Die Stromamplitude A kann auch in Abhängigkeit von einer Induktivität des Elektromotors 1 und/oder eines verketteten magnetischen Flusses des Elektromotors 1 eingestellt werden. Insbesondere wird der feldbildende Motorstromanteil $i_d$ des Motorstroms abhängig von Eigenschaften des Elektromotors 1 eingestellt.

In dem ersten Bremsabschnitt B1 ist der feldbildende Motorstromanteil $i_d$ des Rekuperationsstroms 27 ungleich Null eingestellt, wie in Fig. 8 dargestellt ist. Die rekuperative Rückspeiseleistung $P_{Akku}$ in den Akkupack 3 ist durch das Anpassen des feldbildenden Motorstromanteils $i_d$ begrenzt. Durch den momentbildenden Motorstromanteil $i_q$ ist das Bremsmoment begrenzt.

Im Bremsbetrieb erfolgt die Einstellung des feldbildenden ersten Motorstromanteils $i_d$ derart, dass im Bremsbetrieb des Elektromotors 1 bei gleicher rekuperativer Rückspeiseleistung $P_{Akku}$ in den Akkupack 3 die Bremsleistung des Elektromotors 1 ansteigt. Die Grenzen und die Bremsleistung des erfindungsgemäßen Verfahrens zeigt Fig. 8. Mit dem Bezugszeichen 14 ist die Spannungsgrenze dargestellt. Die Kurve 24 gibt eine Bremskraft von 0,5 Nm an. Die Kurve 34 gibt eine Bremskraft von 1 Nm an. Die Kurve 44 gibt eine Bremskraft von 2 Nm an. Die Kurve 54 gibt eine Bremskraft von 3 Nm an. Die Amplitude A des Rekuperationsstroms 27 (Bremsstrom) wird durch Anpassen der Motorstromanteile $i_q$ und $i_d$ entsprechend eingestellt.

**Patentansprüche**

1. Verfahren zum Betrieb eines feldgeführten Elektromotors (1),

   - mit einer Steuervorrichtung (2) zum Betrieb des Elektromotors (1) an zumindest einem Akkupack (3) mit einer Versorgungsspannung ($U_V$),
   - wobei der Elektromotor einen Stator (8) und einen Rotor (9) aufweist, und der Stator (8) mehrere Feldwicklungen (a, b, c) trägt,
   - und in einem Motorbetrieb zur Ausbildung eines antreibenden elektromagnetischen Drehfeldes die Feldwicklungen (a, b, c) in Abhängigkeit der Drehlage des Rotors (9) von der Steuervorrichtung (2) aus dem Akkupack (3) bestromt werden,
   - wobei der fließende Motorstrom (7) aus einem ersten, einem feldbildenden Motorstromanteil ($i_d$) und einem zweiten, einem momentbildenden Motorstromanteil ($i_q$) zusammengesetzt ist, und eine Stromamplitude (A, A') bilden,
   - und in einem Bremsbetrieb des Elektromotors (1) bei drehendem Rotor (9) in den Feldwicklungen (a, b, c) des Stators (8) induzierten Spannungen einen momentbildenden Motorstromanteil ($i_q$) zum Bremsen des Rotors (9) bewirken,

**dadurch gekennzeichnet,**
- **dass** der Bremsbetrieb zumindest zwei zeitlich getrennte Bremsabschnitte (B1; B2) umfasst,
- **dass** in einem ersten Bremsabschnitt (B1) die Stromamplitude (A) des Motorstroms (7) durch Anpassen des feldbildenden Motorstromanteils ($i_d$) konstant ist,
- **dass** in einem zweiten Bremsabschnitt (B2) die Stromamplitude (A') des Motorstroms (7) variabel ist,
- wobei ein Umschalten des Bremsbetriebs von dem ersten Bremsabschnitt (B1) in den zweiten Bremsabschnitt (B2) bei Unterschreiten einer vorgegebenen Drehzahl ($n_G$) des Elektromotors (1) erfolgt.

2. Verfahren nach Anspruch 1,
**dadurch gekennzeichnet, dass** eine Größe der Stromamplitude (A) in Abhängigkeit von einer Temperatur einer Steuervorrichtung (2) und/oder des Elektromotors (1) eingestellt ist oder die Größe der Stromamplitude (A) in Abhängigkeit von der Größe einer am Elektromotor (1) anliegenden Versorgungsspannung ($U_V$) eingestellt ist, oder die Stromamplitude (A) in Abhängigkeit von einer Induktivität des Elektromotors (1) und/oder eines verketteten magnetischen Flusses des Elektromotors (1) eingestellt ist.

3. Verfahren nach einem der vorhergehenden Ansprüche,
**dadurch gekennzeichnet, dass** in dem ersten Bremsabschnitt (B1) der feldbildende Motorstromanteil ($i_d$) des Motorstroms (7) ungleich Null eingestellt ist.

4. Verfahren nach einem der vorhergehenden Ansprüche,
**dadurch gekennzeichnet, dass** eine rekuperative Rückspeiseleistung ($P_{Akku}$) in den Akkupack (3) durch das Anpassen des feldbildenden Motorstromanteils ($i_d$) begrenzt ist.

5. Verfahren nach Anspruch 4
**dadurch gekennzeichnet, dass** im Bremsbetrieb die Einstellung des feldbildenden ersten Motorstromanteils ($i_d$) derart erfolgt, dass im Bremsbetrieb des Elektromotors (1) bei gleicher rekuperativer Rückspeiseleistung ($P_{Akku}$) in den Akkupack (3) eine Bremsleistung des Elektromotors (1) ansteigt.

6. Verfahren nach einem der vorhergehenden Ansprüche,
**dadurch gekennzeichnet, dass** der erste Bremsabschnitt (B1) eine zeitliche Dauer (T1) aufweist, die größer oder gleich der zeitlichen Dauer (T2) des zweiten Bremsabschnitts (B2) ist.

7. Verfahren nach einem der vorhergehenden Ansprüche,
**dadurch gekennzeichnet, dass** im Betrieb des feldgeführten Elektromotors (1) ein dreiphasiges Drehfeld aufgebaut wird, dass die in den Feldwicklungen (a, b, c) fließenden Ströme ($i_a$, $i_b$, $i_c$) des dreiphasigen Drehfeldes als Vektoren des Drehfeldes erfasst und elektronisch in einen Motorstrom (7) in zweidimensionaler Darstellung transformiert werden, dass der aus dem ersten, feldbildenden Motorstromanteil ($i_d$) und dem zweiten, momentbildenden Motorstromanteil ($i_q$) zusammengesetzte Motorstrom (7) der zweidimensionalen Darstellung derart eingestellt wird, dass im Bremsbetrieb des Elektromotors (1) der feldbildende Motorstromanteil ($i_d$) ungleich Null ist.

8. Vorrichtung zur Durchführung eines Verfahrens zum Betreiben eines feldgeführten Elektromotors (1) mit einem Stator (8) und einem Rotor (9), mit zumindest einem Akkupack (3) zum Betrieb des Elektromotors (1) mit einem Motorstrom (7) mit einer Stromamplitude (A), und mit einer elektrisch mit dem Elektromotor (1) und dem zumindest einen Akkupack (3) verbundenen Steuervorrichtung (2) zur Einstellung der Stromamplitude (A) des Motorstroms (7), wobei der Stator (8) mehrere Feldwicklungen (a, b, c) trägt, die zur Ausbildung eines elektromagnetischen Drehfeldes angeordnet sind, und die Steuervorrichtung (2) ausgebildet ist, im Motorbetrieb die Feldwicklungen (a, b, c) des Stators in Abhängigkeit der Drehlage des Rotors (9) in Drehrichtung (10) antreibend zu bestromen, und die Steuervorrichtung (2) ausgebildet ist, den in einem Bremsbetrieb in den Feldwicklungen (a, b, c) des Stators (8) fließenden Motorstrom (7) einzustellen,
**dadurch gekennzeichnet, dass** die Vorrichtung (40) einen Wandler (41) aufweist, der ausgebildet ist, die in den Feldwicklungen (a, b, c) fließenden Ströme ($i_a$, $i_b$, $i_c$) des mehrphasigen Drehfeldes als Vektoren des Drehfeldes zu erfassen und elektronisch in einen Motorstrom (7) in zweidimensionaler Darstellung zu transformieren, wobei der Motorstrom (7) der zweidimensionalen Darstellung aus einem feldbildenden, ersten Motorstromanteil ($i_d$) und einem momentbildenden, zweiten Motorstromanteil ($i_q$) zusammengesetzt ist, und dass die Vorrichtung (40) ein Regelglied (42) aufweist, das geeignet ist, die Motorstromanteile ($i_d$, $i_q$) in zweidimensionaler Darstellung des Motorstroms (7) in Abhängigkeit eines Betriebszustandes des Elektromotors (1) derart einzustellen, dass im Bremsbetrieb des Elektromotors (1) in zumindest einem ersten Bremsabschnitt (B1) eine Stromamplitude (A) des Motorstroms (7) durch Anpassen des feldbildenden Motorstromanteils ($i_d$) konstant ist, und zumindest in einem zweiten, zeitlich getrennten Bremsabschnitt (B2) die Stromamplitude (A) des Motorstroms (7) variabel ist, wobei eine Umschaltvorrichtung (100) vorgesehen ist, die geeignet ist, bei Unterschreiten einer vorgegebenen Drehzahl (n) des Elektromotors (1) aus dem zumindest einen ersten Bremsabschnitt (B1) auf den zumindest einen zweiten Bremsabschnitt (B2) des Bremsbetriebes umzuschalten.

9. Vorrichtung nach Anspruch 8,
**dadurch gekennzeichnet, dass** die Steuervorrichtung (2) ausgebildet ist, eine Größe der Stromamplitude (A) in Abhängigkeit von einer Temperatur der Steuervorrichtung (2) und/oder des Elektromotors (1) einzustellen oder die Steuervorrichtung (2) ausgebildet ist, die Größe der Stromamplitude (A) in Abhängigkeit von der Größe einer am Elektromotor (1) anliegenden Versorgungsspannung ($U_V$) einzustellen oder die Steuervorrichtung (2) ausgebildet ist, die Stromamplitude (A) in Abhängigkeit von einer Induktivität des Elektromotors (1) und/oder eines verketteten magnetischen Flusses des Elektromotors (1) einzustellen.

10. Vorrichtung nach nach Anspruch 8 oder 9,
**dadurch gekennzeichnet, dass** die Steuervorrichtung (2) ausgebildet ist, in dem zumindest einen ersten Bremsabschnitt (B1) den feldbildenden Motorstromanteil ($i_d$) des Motorstroms (7) mittels des Regelglieds (42) ungleich Null einzustellen.

11. Vorrichtung nach einem der Ansprüche 8 bis 10,
**dadurch gekennzeichnet, dass** die Steuervorrichtung (2) ausgebildet ist, eine rekuperative Rückspeiseleistung ($P_{Akku}$) in den Akkupack (3) durch das Anpassen des feldbildenden Motorstromanteils ($i_d$) mittels des Regelglieds (42) zu begrenzen.

12. Vorrichtung nach Anspruch 11,
**dadurch gekennzeichnet, dass** die Steuervorrichtung (2) ausgebildet ist, im Bremsbetrieb den feldbildenden ersten Motorstromanteil ($i_d$) derart einzustellen, dass im Bremsbetrieb des Elektromotors (1) bei gleicher rekuperativer Rückspeiseleistung ($P_{Akku}$) in den Akkupack (3) eine Bremsleistung des Elektromotors (1) ansteigt.

13. Vorrichtung nach einem der Ansprüche 8 bis 12,
**dadurch gekennzeichnet, dass** die Steuervorrichtung (2) ausgebildet ist, den Elektromotor (1) für eine zeitliche Dauer (T1) des ersten Bremsabschnitts (B1) zu betreiben, wobei die zeitliche Dauer (T1) des ersten Bremsabschnitts größer oder gleich einer zeitlichen Dauer (T2) des zweiten Bremsabschnitts (B2) ist.

14. Vorrichtung nach einem der Ansprüche 8 bis 13,
**dadurch gekennzeichnet, dass** der feldgeführte Elektromotor (1) ausgebildet ist, im Betrieb ein dreiphasiges Drehfeld aufzubauen, dass die in den Feldwicklungen (a, b, c) fließenden Ströme (ia, ib, ic) des dreiphasigen Drehfeldes als Vektoren des Drehfeldes erfasst und elektronisch in einen Motorstrom (7) in zweidimensionaler Darstellung transformiert werden, dass der aus dem ersten, feldbildenden Motorstromanteil ($i_d$) und dem zweiten, momentbildenden Motorstromanteil ($i_q$) zusammengesetzte Motorstrom (7) der zweidimensionalen Darstellung mittels des Regelglieds (42) derart eingestellt wird, dass im Bremsbetrieb des Elektromotors (1) der feldbildende Motorstromanteil ($i_d$) ungleich Null ist.

FIG. 1

*FIG. 2*

EP 4 672 590 A1

*FIG. 3*

*FIG. 4*

*FIG. 5*

*FIG. 6*

EP 4 672 590 A1

*FIG.* 7

EP 4 672 590 A1

FIG. 8

Europäisches
Patentamt

European
Patent Office

Office européen
des brevets

## EUROPÄISCHER RECHERCHENBERICHT

Nummer der Anmeldung

EP 25 18 4768

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 4 087 115 A1 (STIHL AG & CO KG ANDREAS [DE]) 9. November 2022 (2022-11-09) * das ganze Dokument * * Absatz [0070] - Absatz [0080] * ----- | 1-14 | INV. H02P3/18 B25F5/00 H02J7/00 H02P21/22 |
| A | WO 2024/097661 A1 (MILWAUKEE ELECTRIC TOOL CORP [US]) 10. Mai 2024 (2024-05-10) * Zusammenfassung; Abbildungen 3,4,7,10-12 * ----- | 1-14 | H02P21/36 |

RECHERCHIERTE
SACHGEBIETE (IPC)

H02P
B25H
H02J
B25F

Der vorliegende Recherchenbericht wurde für alle Patentansprüche erstellt

| Recherchenort | Abschlußdatum der Recherche | Prüfer |
|---|---|---|
| München | 20. November 2025 | Zeng, Wenyan |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 25 18 4768

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2025

| Im Recherchenbericht angeführtes Patentdokument | Datum der Veröffentlichung | Mitglied(er) der Patentfamilie | Datum der Veröffentlichung |
|---|---|---|---|
| EP 4087115 A1 | 09-11-2022 | KEINE | |
| WO 2024097661 A1 | 10-05-2024 | CN 120188382 A | 20-06-2025 |
| | | DE 112023004563 T5 | 21-08-2025 |
| | | WO 2024097661 A1 | 10-05-2024 |

Für nähere Einzelheiten zu diesem Anhang : siehe Amtsblatt des Europäischen Patentamts, Nr.12/82

EPO FORM P0461